# EUROPÄISCHE PATENTSCHRIFT

(11) **EP 1 390 250 B1**
(45) Veröffentlichungstag und Bekanntmachung des Hinweises auf die Patenterteilung: **24.08.2005**
(21) Anmeldenummer: 02742873.9
(22) Anmeldetag: 04.04.2002
(51) Int. Cl.: B62D 6/00

(54) **VERFAHREN UND VORRICHTUNG ZUR LENKREGELUNG IN EINEM KRAFTFAHRZEUG**
METHOD AND DEVICE FOR ADJUSTING THE STEERING OF A MOTOR VEHICLE
PROCEDE ET DISPOSITIF POUR LA REGULATION DE DIRECTION DANS UN VEHICULE AUTOMOBILE

(30) Priorität: 07.05.2001 DE 10123091
(43) Veröffentlichungstag der Anmeldung: 25.02.2004
(73) Patentinhaber: Volkswagen AG, 38436 Wolfsburg (DE)
(72) Erfinder: NEEF, Barbara, 38165 Lehre (DE)
(74) Vertreter: Effert, Bressel und Kollegen
(86) Internationale Anmeldenummer: PCT/EP2002/003738
(87) Internationale Veröffentlichungsnummer: WO 2002/090169

(56) Entgegenhaltungen:
- DE-A- 3 734 477
- DE-A- 4 404 098
- DE-A- 19 648 497

## Beschreibung

Die Erfindung betrifft ein Verfahren und eine Vorrichtung zur Lenkregelung in einem Kraftfahrzeug.

Die bekannten Verfahren und Vorrichtungen zur Lenkregelung in einem Kraftfahrzeug unterstützen einen Kraftfahrzeugführer in fahrdynamisch kritischen Situationen. Dabei wird einem vom Fahrer am Lenkrad vorgegebenen Lenkwinkel ein Zusatzlenkwinkel überlagert. Je nach Ausführung des aktiven Lenkungsystems erfolgt die Überlagerung über ein Überlagerungsgetriebe oder direkt durch Aufaddition in einem elektrischen Steuergerät, das dann einen elektronischen Stellmotor entsprechend der Summe der Lenkwinkel ansteuert.

Eine derartige Vorrichtung zur Lenkregelung mit Übertagenrngsgetriebe ist beispielsweise in der DE 199 05 433 A1 beschrieben. Der vom Fahrer am Lenkrad eingestellte Lenkwinkel liegt an einem Eingang eines Überlagerungsgetriebes. Aus von der Fahrsituation und von der Umgebungssituation abhängigen Signalen ermittelt eine Steuer-/Regeleinheit einen Zusatzwinkel und führt einen elektrischen Stellmotor einem entsprechenden Ansteuerstrom zu. Der Zusatzlenkwinkel liegt am anderen Eingang des Überlagerungsgetriebes an. Ausgangsseitig erzeugt das Übertagerungsgetriebe einen überlagerten Lenkwinkel für die gelenkten Räder, so dass dieser unabhängig von dem am Lenkrad eingestellten Lenkwinkel verändert werden kann. Ein Lenkgetriebe setzt den überlagerten Winkel in eine entsprechende Bewegung der Spurstange um. Dadurch wird das Fahrzeug trotz unterschiedlicher äußerer Verhältnisse stabilisiert.

Aus der EP 0 846 610 A2 ist eine Verfahren zur Berechnung eines derartigen Zusatzlenkwinkels bekannt, wobei verschiedene fahrzeugdynamische Größen wie Giergeschwindigkeit, Fahrzeuggeschwindigkeit, Längs- und Querbeschleunigung gemessen und berücksichtigt werden.

Aus der DE 37 34 477 A1 ist eine dem Oberbegriff des Anspruchs 1 entsprechende Vorrichtung zur Lenkregelung eines aktiven Lenksystems in einem Kraftfahrzeug bekannt, umfassend eine Einrichtung zur Erfassung eines vom Fahrer an einer Lenkbetätigungseinrichtung eingestellten Lenkwinkels, eine Sensorik zur Erfassung verschiedener fahrzeugdynamischer Größen, einen Regler und eine Stelleinrichtung zur Auslenkung mindestens einer Spurstange, wobei mittels einer Einrichtung der eingestellte Lenkwinkel in eine Bezugsvariable transformierbar ist, die für die gewünschte Bewegung des Fahrzeugs repräsentativ ist und die als Führungsgröße auf den berechenbar, der als Regelgröße auf den Reglereingang geführt ist, wobei die Stellgröße des Reglers ein Solllenkwinkel für die Bezugsvariable ist, der der Stelleinrichtung zur Auslenkung der Spurstange zuführbar ist.

Der Erfindung liegt daher das technische Problem zugrunde, ein Verfahren und eine Vorrichtung zur Lenkregelung in einem Kraftfahrzeug zu schaffen, mittels derer neben einer Stabilisierung des Kraftfahrzeuges auch eine Verbesserung des Fahrkomforts ermöglicht wird.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierzu wird mittels einer Einrichtung der eingestellte Lenkwinkel δ_{L} in einen Sollkurvenradius r soll des Kraftfahrzeuges transformiert und als Führungsgröße auf einen Regler gegeben. Aus den fahrzeugdynamischen Größen wird mittels eines Fahrzeug-Modells ein Istkurvenradius ermittelt und als Regelgröße auf den Regler geführt, der als Stellgröße einem Solllenkwinkel δₛₒₗₗ auf eine Stelleinrichtung zur Auslenkung der Spurstange führt. Hierdurch wird neben der aus dem Stand der Technik bekannten Stabilisierung des Kraftfahrzeuges erreicht, dass der Fahrer bei sich ändemden fahrdynamischen Größen keine Korrektur des Lenkwinkels δ_{L} vornehmen muss, um den gewünschten und durch den Lenkwinkel eingestellten Kurvenradius zu durchfahren, d.h. der Fahrer kann für einen bestimmten Kurvenradius stets den gleichen Lenkwinkel einstellen, unabhängig von den anderen fahrzeugdynamischen Größen. Der Begriff Lenkwinkel bezieht sich allgemein auf den vom Fahrer vorgegebenen Lenkwinkel, unabhängig davon, ob die Lenkbetätigungseinrichtung als Lenkrad, Joystick oder ähnliches ausgebildet ist.

In einer bevorzugten Ausführungsform erfasst die Sensorik zur Erfassung fahrzeugdynamischer Größen mindestens die Geschwindigkeit, die Gierrate und die Querbeschleunigung des Kraftfahrzeuges, so dass mit ausreichender Genauigkeit die Bahnkurve und damit der Istkurvenradius des Kraftfahrzeuges durch das Fahrzeug-Modell berechnet werden kann.

In einer weiteren bevorzugten Ausführungsform wird der Sollkurvenradius aus den Daten eines Navigationssystems ermittelt, so dass unabhängig von dem eingestellten Lenkwinkel δ_{L} immer der richtige Sollkurvenradius dem Regler zugeführt wird, wodurch sich ein autonomes Kurvenverhalten des Kraftfahrzeuges ergibt. In einer alternativen Ausführungsform können die Daten des Navigationssystems zum Abgleich des ermittelten Sollkurvenradius aus dem Lenkwinkel δ_{L} verwendet werden.

Besonders einfach lässt sich die erfindungsgemäße Vorrichtung bzw. das erfindungsgemäße Verfahren in einem steer-by-wire-System implementieren.

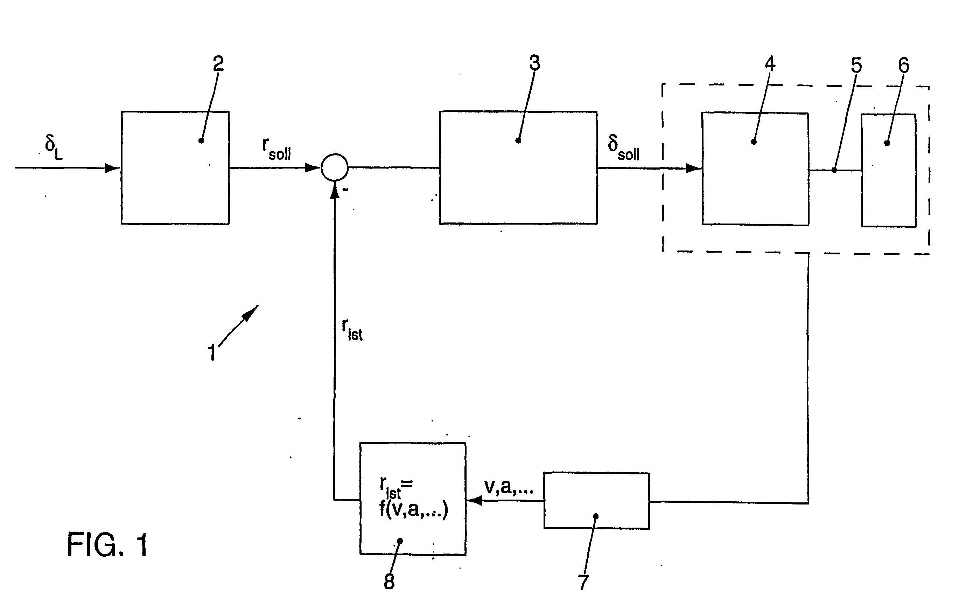

Die Erfindung wird nachfolgend anhand eines bevorzugten Ausführungsbeispiels näher erläutert. Die einzige Figur zeigt ein schematisches Blockschaltbild einer Vorrichtung zur Lenkregelung eines aktiven Lenkungssystems in einem Kraftfahrzeug.

Die Vorrichtung 1 zur Lenkregelung eines aktiven Lenkungssystems umfasst eine nicht dargestellte Einrichtung zur Erfassung eines vom Fahrer an einer Lenkbetätigungseinheit, insbesondere einem Lenkrad eingestellten Lenkwinkels δ_{L}, eine Einrichtung 2 zur Transformation des eingestellten Lenkwinkels δ_{L} in einen Sollkurvenradius rₛₒₗₗ, einen Regler 3, mindestens eine Stelleinrichtung 4 zur Auslenkung mindestens einer Spurstange 5, über die mindestens ein Rad 6 eines Kraftfahrzeuges ausgelenkt wird, eine Sensorik 7 zur Erfassung fahrzeugdynamischer Größen und ein Fahrzeug-Modell 8, mittels dessen anhand der fahrzeugdynamischen Größen der Sensorik 7 ein Istkurvenradius rᵢₛₜ berechenbar ist. Der Solkurvenradius rₛₒₗₗ am Ausgang der Einrichtung 2 ist auf einen Eingang des Reglers 3 geführt und stellt die Führungsgröße des Regelungssystems dar. Der Istkurvenradius rᵢₛₜ ist ebenfalls auf einen Eingang des Reglers 3 geführt und stellt die Regelgröße dar. Am Ausgang des Reglers 3 steht dann ein Solllenkwinkel δₛₒₗₗ an, der einen Zusatzlenkwinkel enthält, um den gewünschten Sollkurvenradius rₛₒₗₗ zu durchfahren. Die Einrichtung 2 zur Transformation des eingestellten Lenkwinkels δ_{L} ist beispielsweise eine in einem Speicher abgelegte Look-up-Tabelle, in der fahrzeugspezifisch und/oder kundenspezifisch einem eingestellten Lenkwinkel δ_{L} fest ein Sollkurvenradius rₛₒₗₗ zugeordnet ist. Die Sensorik 7 zur Erfassung fahrzeugdynamischer Größen erfasst insbesondere die Fahrzeuggeschwindigkeit v, die Querbeschleunigung a und die Gierrate des Kraftfahrzeuges, wobei hinsichtlich Anbringungsort und Ausbildung der einzelnen Sensoren auf den Stand der Technik verwiesen werden kann. Das Fahrzeug-Modell 8 ist im einfachsten Fall ein Mikroprozessor, auf dem die kinematischen Grundgleichungen mit den Fahrzeugparametem abgelegt sind, der dann anhand der fahrzeugdynamischen Größen eine Bahnkurve und somit einen lstkurvenradius rᵢₛₜ des Kraftfahrzeuges berechnen kann. Gegebenenfalls ist das Fahrzeug-Modell 8 selbst mit Regeln ausgebildet, um die Berechnungen durchzuführen.

Die Wirkungsweise und die Unterschiede zum Stand der Technik sollen anhand eines Beispiels kurz erläutert werden. Die bekannten Verfahren zur Lenkregelung addieren einen Zusatzlenkwinkel auf, um das Kraftfahrzeug zu stabilisieren, insbesondere um unterschiedliche Straßenbelagzustände auszugleichen, wobei die Gierrate des Kraftfahrzeuges ausgeregelt wird. Will nun der Fahrer eine Kurve durchfahren, wobei der Einfachheit angenommen sei, dass der Kurvenradius konstant ist, so stellt dieser bei Einfahrt in die Kurve einen Lenkwinkel δ_{L} ein. Verändert nun der Fahrer seine Geschwindigkeit in der Kurve, so muss dieser entsprechend nachlenken. Bei einer Geschwindigkeitserhöhung muss dieser beispielsweise stärker zum Kurvenmittelpunkt einschlagen, d.h. die eingestellten Lenkwinkel δ_{L} sind geschwindigkeitsabhängig vom Fahrer anzupassen.

Dies wird erfindungsgemäß dadurch vermieden, dass nicht eine Gierrate oder eine ähnliche fahrzeugdynamische Größe ausgeregelt wird, sondern der Kurvenradius. Der Fahrer stellt hierzu stets für einen bestimmten Kurvenradius einen festen Lenkwinkel δ_{L} ein, und zwar unabhängig von seiner Geschwindigkeit oder anderer Einflüsse wie beispielsweise Glätte. Eine sich während der Kurvenfahrt veränderte Geschwindigkeit wird wie andere äußere Einflüsse entsprechend ausgeregelt, so dass der Fahrer den eingestellten Lenkwinkel δ_{L} nicht anpassen muss. Dies erhöht den Fahrkomfort bei voller Beibehaltung der Fahrzeugstabilität. Allerdings muss der Fahrer nach wie vor den eingestellten Lenkwinkel δ_{L} an einen sich ändernden Kurvenverlauf anpassen. Abhilfe können hier die Daten eines Navigationssystems schaffen, aus denen der tatsächliche Kurvenverlauf ermittelbar ist. Diese Daten können nun zum Abgleich des eingestellten Lenkwinkels δ_{L} bzw. des Sollkurvenradius' rₛₒₗₗ verwendet werden, falls der Fahrer einen falschen Lenkwinkel δ_{L} für den Kurvenverlauf einstellt. Dies kann soweit gehen, dass unabhängig vom eingestellten Lenkwinkel δ_{L} stets der Sollkurvenradius rₛₒₗₗ aus den Daten einer digitalen Straßenkarte entnommen wird, so dass ein autonomes Fahrzeug entsteht.

Das aktive Lenkungssystem kann dabei als reines steer-by-wire-System oder als elektromechanisches Lenkungssystem mit Überlagerungsgetriebe ausgebildet sein.

## Patentansprüche

1. Vorrichtung zur Lenkregelung eines aktiven Lenkungssystems in einen Kraftfahrzeug, umfassend eine Einrichtung zur Erfassung eines vom Fahrer an einer Lenkbetätigungseinrichtung eingestellten Lenkwinkels δ_{L}, eine Sensorik zur Erfassung verschiedener fahrzeugdynamischer Größen, einen Regler und eine Stelleinrichtung zur Auslenkung mindestens einer Spurstange,
**dadurch gekennzeichnet, dass**
mittels einer Einrichtung (2) der eingestellte Lenkwinkel (δ_{L}) in einen Sollkurvenradius (rₛₒₗₗ) des Kraftfahrzeuges transformierbar ist, der als Führungsgröße auf den Reglereingang geführt ist, mittels eines Fahrzeug-Modells (8) aus den Daten der Sensorik (7) ein Istkurvenradius (rᵢₛₜ) berechenbar ist, der als Regelgröße auf den Reglereingang geführt ist, wobei die Stellgröße des Reglers (3) ein Solllenkwinkel (δ_{Soll}) für den Sollkurvenradius (rₛₒₗₗ) ist, der der Stelleinrichtung zur Auslenkung der Spurstange (5) zuführbar ist.

2. Vorrichtung nach Anspruch 1, **dadurch gekennzeichnet, dass** die Einrichtung (2) zur Transformierung des eingestellten Lenkwinkels (δ_{L}) als Look-up-Tabelle ausgebildet ist.

3. Vorrichtung nach Anspruch 1 oder 2, **dadurch gekennzeichnet, dass** die Sensorik (7) zur Erfassung fahrzeugdynamischer Größen mindestens die Geschwindigkeit (v), die Gierrate und die Querbeschleunigung (a) des Kraftfahrzeuges erfasst.

4. Vorrichtung nach einem der vorangegangenen Ansprüche, **dadurch gekennzeichnet, dass** der Vorrichtung (1) Daten eines Navigationssystems zuführbar sind, aus denen ein Sollkurvenradius (rₛₒₗₗ) ermittelbar ist.

5. Vorrichtung nach einem der vorangegangenen Ansprüche, **dadurch gekennzeichnet, dass** das Lenkungssystem als Steer-by-wire-System ausgebildet ist.

6. Verfahren zur Lenkregelung eines aktiven Lenkungssystems in einem Kraftfahrzeug, umfassend folgende Verfahrensschritte:
a) Erfassen des eingestellten Lenkwinkels (δ_{L}) an einer Lenkbetätigungseinrichtung,
b) Umrechnen des eingestellten Lenkwinkels (δ_{L}) in einen Sollkurvenradius (rₛₒₗₗ)
c) Ermitteln eines Istkurvenradius' (rᵢₛₜ) aus erfassten fahrzeugdynamischen Größen einer Sensorik (7) mittels eines Fahrzeug-Modells (8),
d) Erzeugen eines Solllenkwinkels (δₛₒₗₗ) durch einen Regler (3) mit der Führungsgröße (rₛₒₗₗ) und der Regelgröße (rᵢₛₜ) und
e) Zuführen des Solllenkwinkels (δₛₒₗₗ) auf eine Stelleinrichtung (4) zur Auslenkung einer Spurstange (5).

7. Verfahren nach Anspruch 6, **dadurch gekennzeichnet, dass** bei der Ermittlung des Istkurvenradius' (rᵢₛₜ) mindestens die Geschwindigkeit (v), die Gierrate und die Querbeschleunigung (a) berücksichtigt werden.

## Claims

1. Device for adjusting the steering of an active steering system in a motor vehicle, comprising a device for sensing a steering angle δ_{L} which is set on a steering activation device by the driver, a sensor system for sensing various vehicle-dynamic variables, a regulator and an actuating device for deflecting at least one track rod, **characterized in that** the steering angle (δ_{L}) which is set can be transformed by means of a device (2) into a setpoint bend radius (rₛₒₗₗ) of the motor vehicle, which setpoint bend radius (rₛₒₗₗ) is fed as a reference variable to the control input, and by means of a vehicle model (8) an actual bend radius (rᵢₛₜ) can be calculated from the data of the sensor system (7) and is fed as a controlled variable to the controller input, with the manipulated variable of the controller (3) being a setpoint steering angle (δₛₒₗₗ) for the setpoint bend radius (rₛₒₗₗ) which can be fed to the actuating device for deflecting the track rod (5).

2. Device according to Claim 1, **characterized in that** the device (2) for transforming the steering angle (δ_{L}) which is set is embodied as a look-up table.

3. Device according to Claim 1 or 2, **characterized in that** the sensor system (7) for sensing vehicle-dynamic variables senses at least the velocity (v), the yaw rate and the lateral acceleration (a) of the motor vehicle.

4. Device according to one of the preceding claims, **characterized in that** data from a navigation system from which a setpoint bend radius (rₛₒₗₗ) can be determined can be fed to the device (1).

5. Device according to one of the preceding claims, **characterized in that** the steering system is embodied as a steer-by-wire system.

6. Method for adjusting the steering of an active steering system in a vehicle, comprising the following method steps:
a) sensing of the steering angle (δ_{L}) which is set at a steering activation device,
b) conversion of the steering angle (δ_{L}) which is set into a setpoint bend radius (rₛₒₗₗ),
c) determination of an actual bend radius (rᵢₛₜ) from sensed vehicle-dynamic variables of a sensor system (7) by means of a vehicle model (8),
d) generation of a setpoint steering angle (δₛₒₗₗ) by a controller (3) with the reference variable (rₛₒₗₗ) and the controlled variable (rᵢₛₜ), and
e) feeding of the setpoint steering angle (δₛₒₗₗ) to an actuating device (4) for deflecting a track rod (5).

7. Method according to Claim 6, **characterized in that** at least the velocity (v), the yaw rate and the lateral acceleration (a) are taken into account in the determination of the actual bend radius (rᵢₛₜ).

## Revendications

1. Procédé de régulation de la direction d'un système de direction actif dans un véhicule automobile, comprenant un dispositif pour détecter un angle de direction réglé δ_{L} par le conducteur au niveau d'un dispositif de commande de la direction, un dispositif de détection pour détecter différentes grandeurs dynamiques du véhicule, un régulateur et un dispositif de positionnement pour dévier au moins une barre d'accouplement, **caractérisé en ce que** l'angle de direction réglé (δ_{L}) peut être transformé en un rayon de virage de consigne (rₛₒₗₗ) du véhicule automobile au moyen d'un dispositif (2), lequel est acheminé en tant que grandeur de référence à une entrée du régulateur, un rayon de virage réel (rᵢₛₜ) peut être calculé au moyen d'un modèle de véhicule (8) à partir des données du dispositif de détection (7), lequel est acheminé en tant que grandeur de régulation à l'entrée du régulateur, la grandeur de commande du régulateur (3) étant un angle de direction de consigne (δₛₒₗₗ) pour le rayon de virage de consigne (rₛₒₗₗ), lequel peut être acheminé au dispositif de positionnement pour la déviation de la barre d'accouplement (5).

2. Dispositif selon la revendication 1, **caractérisé en ce que** le dispositif (2) est réalisé sous la forme d'une table à consulter pour transformer l'angle de direction réglé (δ_{L}).

3. Dispositif selon la revendication 1 ou 2,
**caractérisé en ce que** le dispositif de détection (7) destiné à détecter les grandeurs dynamiques du véhicule détecte au moins la vitesse (v), le facteur de lacet et l'accélération transversale (a) du véhicule automobile.

4. Dispositif selon l'une des revendications précédentes, **caractérisé en ce qu'**au dispositif (1) peuvent être acheminées les données d'un système de navigation à partir desquelles peut être déterminé un rayon de virage de consigne (rₛₒₗₗ).

5. Dispositif selon l'une des revendications précédentes, **caractérisé en ce que** le système de direction est réalisé sous la forme d'un système de guidage par câble.

6. Procédé de régulation de la direction d'un système de direction actif dans un véhicule automobile, comprenant les étapes suivantes :
a) Détection de l'angle de direction réglé (δ_{L}) sur un dispositif d'actionnement de la direction,
b) Conversion de l'angle de direction réglé (δ_{L}) en un rayon de virage de consigne (rₛₒₗₗ),
c) détermination d'un rayon de virage réal (rᵢₛₜ) à partir des grandeurs dynamiques du véhicule détectées par un dispositif de détection (7) au moyen d'un modèle de véhicule (8),
d) Génération d'un angle de direction de consigne (δₛₒₗₗ) par un régulateur (3) avec la grandeur de référence (rₛₒₗₗ) et la grandeur de régulation (rᵢₛₜ) et
e) Acheminement de l'angle de direction de consigne (δₛₒₗₗ) à un dispositif de positionnement (4) en vue de dévier une barre d'accouplement (5).

7. Procédé selon la revendication 6, **caractérisé en ce que** lors de la détermination du rayon de virage réel (rᵢₛₜ), au moins la vitesse (v), le facteur de lacet et l'accélération transversale (a) sont pris en compte.
